# EUROPEAN PATENT APPLICATION

(11) **EP 3 220 083 A1**
(43) Date of publication of application: **20.09.2017**
(21) Application number: 16000631.8
(22) Date of filing: 16.03.2016
(51) Int. Cl.: F27B 3/02, C21B 13/00, F27D 17/00, F27B 14/00

(54) **TREATMENT OF PARTICULATE WASTE**

(71) Applicant: Linde Aktiengesellschaft, 80331 München (DE)
(72) Inventor: CAMERON, Andrew, Matlock Derbyshire DE4 5WA (GB)
(74) Representative: Gellner, Bernd

(57) **Abstract**

The present invention provides a process for the treatment of iron- and carbon-containing particulate waste, the process comprising:
providing an iron- and carbon-containing particulate waste having a moisture content of less than 80wt%;
providing a cyclonic dryer driven by a flow of gases,
providing a smelting furnace having a treatment chamber, wherein the treatment chamber comprises an inlet in fluid communication with an outlet of the cyclonic dryer and comprising one or more oxygen inlets,
drying the iron- and carbon-containing particulate waste in the cyclonic drying chamber to form a dried iron-containing particulate waste,
passing the dried iron-containing particulate waste from the outlet of the cyclonic dryer to the inlet of the treatment chamber,
heating the dried iron- and carbon-containing particulate waste in the treatment chamber of the smelting furnace to form a slag and, optionally, a molten iron layer, and wherein the dried iron- and carbon-containing particulate waste is heated by combustion of the carbon to form a CO-containing off-gas by addition of oxygen through the one or more oxygen inlets.

## Description

The present disclosure relates to a method for the treatment of iron- and carbon-containing particulate waste and, in particular, to a more efficient method for the reduction of iron.

Oxyfines™ is an Oxyfuel-based technology developed by AGA Linde for in-plant recycling. It has been developed to enable the efficient on-site recycling of fines, dust and sludge, and has been directly applied to existing processes. It provides a solution to most dust treatment and recycling problems in the metallurgical industry. Oxyfines^{™} technology uses an oxy-fuel burner. More information on the oxy-fuel and Oxyfines^{™} system is provided in "Oxyfines technology for the re-melting of fines, dust and sludge", J. von Schèele, Tenth International Ferroalloys Congress; 1 - 4 February 2004, INFACON X: Transformation through Technology ISBN: 0-9584663-5-1.

The Oxyfines™ method allows fines, dust, sludge (with no drying stage) and other byproducts to be recycled directly back into existing processes or to a separate on-site unit. The technology has been successfully applied to the recycling of a number of dry and wet materials, including iron powder dust and rejects, fines, dust and sludge from the production of various ferroalloys (ferrosilicon, ferrochrome and silicon manganese), carbon and stainless steel production dust, and dust and sludge from blast furnaces and steel-making converters. Since the recycled materials contain metals, the technology not only provides a solution to the problems associated with dust and sludge-generation in metal production, it also converts waste materials into a low-cost raw material that can be used in various processes, substituting raw material input.

In practice and when applied to the processing of iron and steel plant wastes, the existing Oxyfines™ process volatilises zinc and alkali metals that cannot be recycled to the blast furnace and it generates a slag product with a very high iron oxide content. Such slags are extremely aggressive towards refractories.

A second issue related to the original mode of operation was that the slag had to be recycled to the blast furnace *via* a sinter strand. This incurs an energy penalty in the form of fuel gas and coke consumption because the iron oxide has to undergo various processes. In particular, the iron oxide has to be heated to melting temperatures in the Oxyfines™ furnace before being cooled and crushed. It is then reheated in the sinter plant where it is cooled once again before being charged to the blast furnace where it is re-heated to elevated temperatures to facilitate its reduction to iron.

Accordingly, there is a desire for a process that can treat iron and steel plant wastes to produce a slag product that is easier to handle than in prior art processes or, at least, to provide a commercially useful alternative thereto.

According to a first aspect, the present disclosure provides a process for the treatment of iron- and carbon-containing particulate waste, the process comprising:
providing an iron- and carbon-containing particulate waste having a moisture content of less than 80wt%,
providing a cyclonic dryer driven by a flow of gases,
providing a smelting furnace having a treatment chamber, wherein the treatment chamber comprises an inlet in fluid communication with an outlet of the cyclonic dryer and comprising one or more oxygen inlets,
drying the iron- and carbon-containing particulate waste in the cyclonic drying chamber to form a dried iron-containing particulate waste,
passing the dried iron-containing particulate waste from the outlet of the cyclonic dryer to the inlet of the treatment chamber,
heating the dried iron- and carbon-containing particulate waste in the treatment chamber of the smelting furnace to form a slag and, optionally, a molten iron layer, and wherein the dried iron- and carbon-containing particulate waste is heated by combustion of the carbon to form a CO-containing off-gas by addition of oxygen through the one or more oxygen inlets.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present invention provides a process for the treatment of iron- and carbon-containing particulate waste. For brevity, the iron- and carbon-containing particulate waste is also referred to generally as an iron-containing particulate waste herein.

Preferably the iron- and carbon-containing particulate waste is obtained from an iron and steel plant blast furnace. The waste is preferably in the form of fines, dust or sludge. Where the waste is in the form of a sludge, drying can be combined with partial reduction of oxides. The waste does not require briquetting before treatment. Sludges are often produced during off-gas treatment of iron and steel plants following wet-scrubbing of particulates carried in the off-gas.

The iron-containing particulate waste preferably has a mean longest particle diameter of less than 10 mm, more preferably less than 5 mm, and still more preferably less than 1 mm. The particles most preferably have a mean longest particle diameter of less than 0.5 mm. The particles preferably have a mean longest particle diameter of at least 0.001 mm. This can be measured using an optical microscope.

Preferably, the iron-containing particulate waste comprises from 20 to 50 wt% iron oxide by dry weight of the waste, more preferably from 25 to 40 wt%, and most preferably from 30 to 35 wt%. The term "iron oxide" as used herein includes both iron (II) oxide and iron (III) oxide.

Preferably the iron-containing particulate waste comprises from 30 to 60 wt% carbon by dry weight of the waste, more preferably from 40 to 55 wt%, and most preferably from 45 to 50 wt%. As will be explained below, the heating step of the present process is particularly effective because of the carbon present in the particulate iron-containing waste.

The iron-containing particulate waste may contain other components, such as SiO₂, Al₂O₃, MgO, SO₃, PbO, Na₂O and K₂O. Where present, each component is preferably present in an amount of from 0.2 to 5 wt% by dry weight of the waste.

The iron- and carbon-containing particulate waste has a moisture content of less than 80wt%. Preferably the iron- and carbon-containing particulate waste has a water content of from 20 to 80wt%, more preferably from 30 to 60wt%.

The higher the water content of the waste, the higher the energy penalty associated with the treatment of sludge and the water can increase the oxidation potential. The inventors have found that where the iron-containing particulate waste has a high water content, the large amount of steam in the treatment chamber atmosphere leads to excessively high oxygen potential preventing the reduction of iron oxide. As will be appreciated, there is almost always a significant amount of water present as a result of the methods for dust handling and recovery. Where the waste is obtained from an iron or steel plant blast furnace, waste dewatered by a filter press typically has a moisture content of about 35%, while waste from a centrifuge typically has a moisture content of about 55%. The waste from a clarifier typically contains about 80% moisture, and so processing this material carries a relatively high energy penalty. The use of the cyclonic dryer as described herein permits the treatment of such sludges with a high efficiency.

The first active step of the process involves drying the iron- and carbon-containing particulate waste in the cyclonic drying chamber to form a dried iron-containing particulate waste. Preferably the dried iron- and carbon-containing particulate waste has a water content of less than 20wt%, more preferably less than 10wt%. The dried iron-containing particulate waste makes the subsequent smelting process commercially viable.

The process relies on a cyclonic dryer driven by a flow of gases to achieve the drying. Cyclonic dryers are well known in industrial processing. They typically comprise a conical treatment chamber fed with a fast moving flow of gases. These spiral around the treatment chamber, heating and mixing particulate matter added to the cyclone. As the matter is dried it falls within the cyclone to an outlet at the bottom. The flow of gases typically leave the top of the cyclone and may be subjected to atmospheric pollutant control systems.

In order for the cyclone to have a strong drying effect it is necessary for the gases within the cyclone to be hot. This may be achieved in one of two ways, or a combination thereof. In the first approach the gases are hot because they have been preheated before being introduced. In the second approach, combustible gases are introduced into the cyclone for combustion within (or directly adjacent) the cyclone treatment chamber.

According to the first approach, the preferred source of pre-heated gases include hot gases: (i) obtained by combustion of natural gas; and/or (ii) obtained by combustion of blast furnace gas; and/or (iii) pre-heated by electrical heating, such as plasma, induction or resistive heating; and/or (iv) obtained from hot blast stoves (such as 250 to 400°C) The hot off-gas from the hot blast stoves may be used as a direct heat source for the drying step or indirect (heat exchanger).

According to the second approach, the calorific gas may comprise any fuel gas, preferably natural gas, or a recycled portion of CO-containing off-gas obtained from the smelting chamber. The calorific gas may also be any process gas associated with iron and steel production plants. The gas preferably enters the cyclonic dryer through means for combusting calorific gas within the cyclonic dryer, such as an oxyfuel burner. That is, the exhaust of the burner is within or directly connected to the cyclone to provide the requisite tangential flow of fast moving gases.

It is most preferred that the flow of gases includes both calorific gas and pre-heated gas for procedural efficiency.

In a preferred aspect, the process has a start-up period within which the cyclonic dryer and the smelting furnace treatment chamber are heated, and a continuous period where a steady process temperature is maintained. During the start-up period the cyclone may be heated by the combustion of natural gas in an oxyfuel burner, for example. During the continuous period, the cyclone may be heated by the combustion of the CO-containing off-gas. This is desirably passed through the oxyfuel burner in a recycle loop to burn with the addition of oxygen, but may alternatively be combusted in the cyclone as it rises from the smelting chamber into the cyclone, if other gas exhaust outlets are not provided in the treatment chamber.

The process also relies on a smelting furnace having a treatment chamber, wherein the treatment chamber comprises an inlet in fluid communication with an outlet of the cyclonic dryer and comprising one or more oxygen inlets. Once it has been dried, the dried iron-containing particulate waste is passed from the outlet of the cyclonic dryer to the inlet of the treatment chamber. Preferably the dried iron- and carbon-containing particulate waste passes from the outlet of the cyclonic dryer to the inlet of the treatment chamber by falling under gravity.

The dried iron- and carbon-containing particulate waste is then heated in the treatment chamber of the smelting furnace to form a slag and, optionally, a molten iron layer. Advantageously the dried iron- and carbon-containing particulate waste is heated by combustion of the carbon to form a CO-containing off-gas by addition of oxygen through the one or more oxygen inlets. Secondary heating may also be employed. The inventors have found that the off-gas from lancing oxygen into the treatment chamber has a high CO content and therefore has a significant calorific value. This CO-containing off-gas can be recycled and used as a fuel source for the drying step.

During the steady state processing period, it is important that the added oxygen is substoichiometric to the carbon in the dried waste to ensure that there is enough carbon remaining to efficiently reduce the iron.

The total power input required in the iron-containing particulate waste treatment depends primarily on two factors. Firstly, the ratio of C:Fe. Carbon not needed for iron oxide reduction can be burnt as a fuel. Therefore, a high C:Fe ratio means surplus carbon, reducing the power input required from fuel gas. Secondly, the water content of the iron-containing particulate waste. Water present in the waste will be boiled either during the smelting treatment or during the preceding drying step, in either case the heat duty required for dewatering will have a significant effect of the total power input. Preferably the total power supplied to the treatment chamber is from 1 to 20 kW per kg waste.

Preferably, the slag comprises less than 50 wt% iron oxide by total weight of the slag. Preferably that slag comprises less than 30 wt% iron oxide, more preferably less than 20 wt%, still more preferably less than 10 wt%, still more preferably less than 5 wt%, and most preferably less than 1 wt%. Advantageously, these levels are significantly less than in the iron oxide levels found in slags obtained from prior art processes (typically around 70 wt%). Lowering the amount of iron oxide in the slag also helps avoid the above-discussed negative operational consequences associated with an iron-oxide rich product.

The slag may additionally contain other minerals such as CaO, CaS, SiO₂, and Al₂O₃. The relative proportions of these minerals may be adjusted if necessary by the addition of fluxing agents to ensure a fluid slag phase at the desired operating temperature. As will be appreciated, the levels of additional minerals will also vary depending on the composition of the iron-containing particulate waste and its water content. A typical slag composition is of 0-2% FeO, 5-15%MgO, 15-30% CaO, 25-35% Al₂O₃ and 25-40% SiO₂.

Where present, the molten iron layer typically forms on the bottom of the chamber and may be drawn off separately from the slag. The molten iron layer may comprise small quantities of other metals and impurities, such as Si or Mn, at levels reflecting their content in the waste materials processed and their thermodynamic partitioning between the metal and slag layers. For example, the molten iron layer may comprise from 0 to 5 wt% carbon by total weight of the molten iron layer. Preferably, the molten iron layer comprises from 95 to 99 wt% iron by total weight of the molten iron layer, preferably the molten iron layer consists essentially of iron.

Preferably, where the iron-containing particulate waste is obtained from an iron and steel plant blast furnace, at least a portion of the slag and/or molten iron layer may be recycled to the iron and/or steel plants, improving the overall yield iron obtained from the sites raw materials. The slag has a significantly reduced concentration of iron oxide relative to slags produced from prior art Oxyfines™ processes and is significantly less aggressive towards refractories.

Preferably the one or more oxygen inlets comprise an oxyfuel burner. That is, the treatment chamber may be a treatment chamber of an oxy-fuel furnace. The oxy-fuel furnace comprises an oxy-fuel burner. Such furnaces are known, for example, in WO 2002/066895 and WO 2006/107256.

The conventional Oxyfines™ process uses oxy-fuel burner technology to provide the required heat. Iron plant wastes typically contain large amounts of carbon and this can be combusted in the presence of excess oxygen to reduce the consumption of fuel gas. However, the present inventors have found that oxy-fuel burner technology is not effective at reducing the iron oxide content of the slag. The reduction of iron oxide by carbon is endothermic and, if the reaction is to take place, additional energy must be provided to maintain the temperature required to melt the condensed phases present in the furnace. This can be achieved by pre-heating and drying the iron- and carbon-containing particulate waste material immediately before smelting.

Preferably, the temperature in the treatment chamber is from 1200 to 1800 °C, more preferably from 1400 to 1600 °C, and most preferably about 1500 °C.

Preferably the atmosphere within the treatment chamber comprises an Oxygen potential of less than 3x10⁻¹⁰kPa.

Preferably the step of heating the iron-containing particulate waste forms a molten iron layer, and at least a portion of the molten iron layer is passed to a basic oxygen steelmaking (BOS) convertor to produce steel.

Preferably the at least a portion of the slag and/or molten iron layer is recycled to an iron and/or steel plant.

The invention will now be described in relation to the following non-limiting figures, in which:
Figure 1 shows a schematic of an embodiment of the treatment system described herein.
Figure 2 shows a schematic of an embodiment of the treatment system described herein.

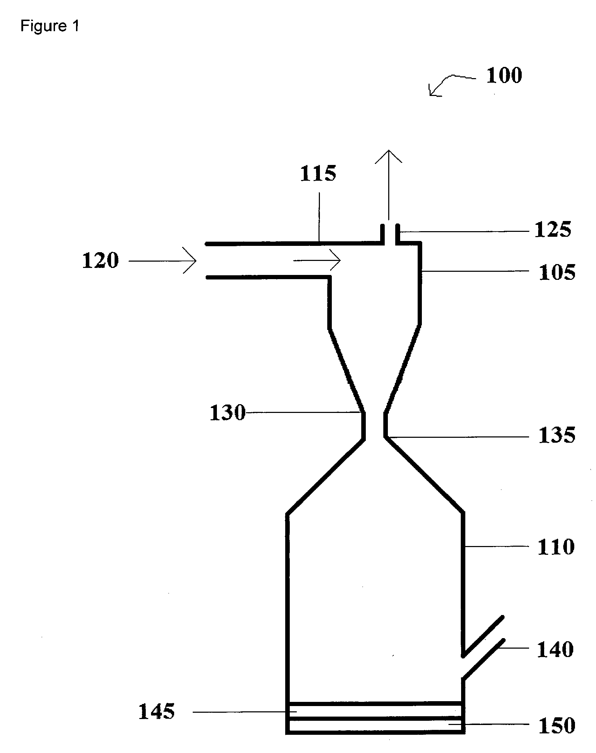

In particular, Figure 1 shows a treatment system 100. The system 100 comprises a cyclonic dryer 105 and a smelting furnace 110. The cyclonic dryer 105 has an inlet 115 through which a flow of gases 120 may be provided. The inlet 115 may be an oxyfuel burner in which case the flow of gases 120 comprise oxygen and calorific gases which are combusted. The cyclonic dryer has an outlet 125 for gas emissions and an outlet 130 for dried non-gaseus material.

The outlet 130 is connected to the inlet 135 of the smelting furnace 110. The smelting furnace 110 has an inlet 140 for oxygen gas which may be in the form of an oxygen lance.

In use, iron- and carbon-containing particulate waste is fed into the cyclonic dryer 105. The waste is in the form of a sludge and has a water content of typically 50 to 80wt%. The sludge may be fed into the cyclonic dryer through the inlet 115 with the flow of gases 120, or may be introduced through another inlet in the dryer (not shown).

The waste is dried in the cyclonic dryer 105 in the flow of gases 120. The dried particulate waste, which will have a moisture content of less than 20wt% falls through the outlet 130, while the gases exhaust through the outlet 125.

The dried particulate waste enters the inlet 135 of the treatment chamber 110 and is smelted to form a slag layer 145 above a metal layer 150. The metal layer 150 is primarily iron. The slag layer 145 contains carbon which is combusted in oxygen added from the oxygen lance 140 to provide additional heating within the treatment chamber 110. This produces CO-containing off gas which can rise to the outlet 125 and will typically be combusted within the cyclonic dryer 105 to provide additional heating for drying the waste,

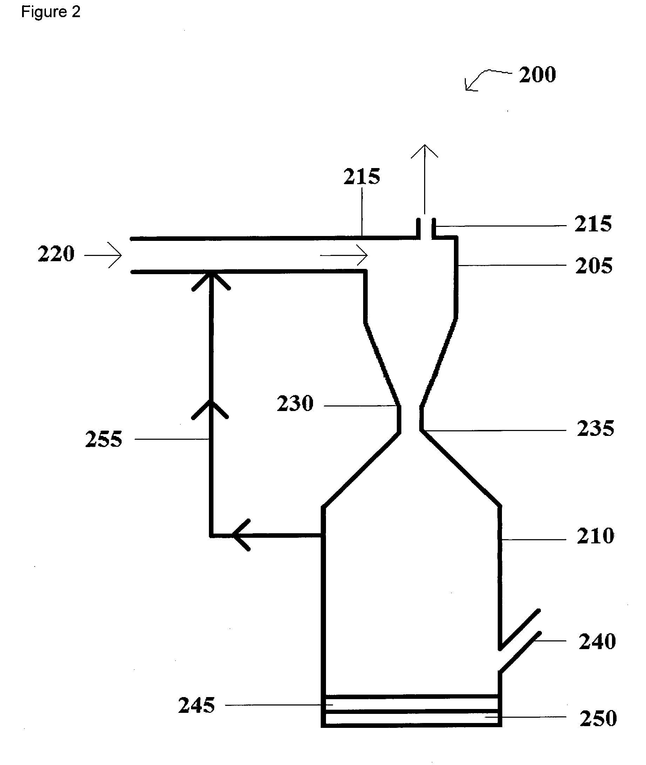

Figure 2 shows a treatment system 200. The features of this system which correspond to those of Figure 1 have been given similar numbers.

The CO-containing off gas which is produced in the treatment chamber 210 is drawn through a recycle loop 255. The off-gas may be drawn with fans or similar. The off-gas is intermingled with the hot gases 220 to provide a portion of the calorific value of the gases combusted in the oxyfuel burner 215.

### Examples

The Inventors found that the off-gas from the oxyfuel treatment chamber contains a large amount of CO. Modelling shows that this gas may be combusted to heat a cyclonic dryer in order to dry the sludge. Table 1 provides modelled data showing the effect of such a process. In the top row the water content is 35%. In the 2nd and 3rd rows a higher water content of 55% has been considered. In the 3rd row the CO recycle has been maximised to reduce the use of external fuel gas.

**Table 1:**

| Nat Gas Nm3/h | O2 Nm3/h | CO Recycle Nm3/h | Cyclone Off-Gas Nm3/h | O2 to smelter lances Nm3/h | Smelter Off-gas Nm3/h | Scrap Addition kg/h | Fe production kg/h | Slag Production kg/h | Slag %FeO |
|---|---|---|---|---|---|---|---|---|---|
| 50 | 205 | 410 | 1075 | 208 | 523 | 583 | 778 | 88 | 0 |
| 200 | 465 | 130 | 1666 | 75 | 224 | 750 | 851 | 66 | 0 |
| 172 | 410 | 200 | 1604 | 75 | 224 | 577 | 678 | 66 | 0 |

This data shows the effect recycling at least a portion of the CO-containing off-gas from the smelting chamber and combusting it to provide at least a portion of the heat duty required by the cyclonic dryer. This leads to a reduction in the quantity of supplementary fuel needed to run the iron- and carbon-containing particulate waste treatment process. This may lead to an increase in the amount of iron and/or steel produced per tonne of raw material used.

Although preferred embodiments of the invention have been described herein in detail, it will be understood by those skilled in the art that variations may be made thereto without departing from the scope of the invention or of the appended claims.

## Claims

1. A process for the treatment of iron- and carbon-containing particulate waste, the process comprising:
providing an iron- and carbon-containing particulate waste having a moisture content of less than 80wt%;
providing a cyclonic dryer driven by a flow of gases,
providing a smelting furnace having a treatment chamber, wherein the treatment chamber comprises an inlet in fluid communication with an outlet of the cyclonic dryer and comprising one or more oxygen inlets,
drying the iron- and carbon-containing particulate waste in the cyclonic drying chamber to form a dried iron-containing particulate waste,
passing the dried iron-containing particulate waste from the outlet of the cyclonic dryer to the inlet of the treatment chamber,
heating the dried iron- and carbon-containing particulate waste in the treatment chamber of the smelting furnace to form a slag and, optionally, a molten iron layer, and
wherein the dried iron- and carbon-containing particulate waste is heated by combustion of the carbon to form a CO-containing off-gas by addition of oxygen through the one or more oxygen inlets.

2. The process according to claim 1, wherein the iron- and carbon-containing particulate waste is obtained from an iron or steel plant blast furnace, preferably as a sludge.

3. The process according to claim 1 or claim 2, wherein the iron- and carbon-containing particulate waste has a water content of from 20 to 80wt%, more preferably from 30 to 60wt%.

4. The process of any of the preceding claims, wherein the dried iron- and carbon-containing particulate waste has a water content of less than 20wt%, more preferably less than 10wt%.

5. The process of any of the preceding claims, wherein at least a portion of the flow of gases driving the cyclonic dryer pass through means for combusting calorific gas within the cyclonic dryer, preferably an oxyfuel burner.

6. The process of claim 5, wherein the flow of gases driving the cyclonic dryer comprises natural gas and/or at least a portion of the CO-containing off-gas.

7. The process of any of the preceding claims, wherein the flow of gases driving the cyclonic dryer comprises hot gases:
(i) obtained by combustion of natural gas; and/or
(ii) obtained by combustion of blast furnace gas; and/or
(iii) pre-heated by electrical heating, such as plasma, induction or resistive heating; and/or
(iv) obtained from hot blast stoves.

8. The process of any of the preceding claims, wherein the dried iron-containing particulate waste passes from the outlet of the cyclonic dryer to the inlet of the treatment chamber by falling under gravity.

9. The process of any of the preceding claims, wherein one or more oxygen inlets comprise an oxyfuel burner.

10. The process according to any of the preceding claims, wherein the total power supplied to the treatment chamber is from 1 to 20 kW per kg waste.

11. The process according to any of the preceding claims, wherein the temperature in the treatment chamber is from 1200 to 1800 °C.

12. The process according to any of the preceding claims, wherein the partial oxygen potential in the treatment chamber is less than 3x10⁻¹⁰ kPa.

13. The process according to any of the preceding claims, wherein the iron-containing particulate waste comprises from 20 to 50 wt% iron oxide by dry weight of the waste.

14. The process according to any of the preceding claims, wherein the iron-containing particulate waste comprises from 30 to 60 wt% carbon by dry weight of the waste.

15. The process according to any of the preceding claims, wherein the slag comprises less than 30 wt% iron oxide by total weight of the slag, preferably less than 20 wt% iron oxide, more preferably less than 10 wt% iron oxide, most preferably less than 1 wt% iron oxide.

16. The process according to any of the preceding claims, wherein the step of heating the iron-containing particulate waste forms a molten iron layer, and wherein at least a portion of the molten iron layer is passed to a basic oxygen steelmaking (BOS) convertor to produce steel.

17. The process according to any of the preceding claims, wherein the at least a portion of the slag and/or molten iron layer is recycled to an iron and/or steel plant.
